(19) **Europäisches Patentamt**

**European Patent Office**

**Office européen des brevets**

(11) Veröffentlichungsnummer: **0 353 477**

**A1**

(12) **EUROPÄISCHE PATENTANMELDUNG**

(21) Anmeldenummer: **89112227.7**

(22) Anmeldetag: **04.07.89**

(51) Int. Cl.4: **C09D 5/02 , C09D 133/06 , C09D 167/08 , //(C09D167/08, 101:18)**

(30) Priorität: **05.07.88 DE 3822731**

(43) Veröffentlichungstag der Anmeldung: **07.02.90 Patentblatt 90/06**

(84) Benannte Vertragsstaaten: **AT BE CH DE ES FR GB IT LI NL SE**

(71) Anmelder: **ICI Lacke Farben GmbH Postfach 940 Düsseldorfer Strasse 102 D-4010 Hilden/Rhld.(DE)**

(72) Erfinder: **Wentzel, Günter Ehlenbeck 16 D-5657 Haan 2(DE)** Erfinder: **Meinhold, Holger Richrather Str. 52 D-4010 Hilden(DE)**

(74) Vertreter: **Patentanwälte TER MEER - MÜLLER - STEINMEISTER Mauerkircherstrasse 45 D-8000 München 80(DE)**

(54) **Spritzanstrichmittel auf Wasserbasis.**

(57) Beschrieben wird ein Spritzanstrichmittel auf Wasserbasis auf der Grundlage eines einphasigen Gemisches aus 5 bis 60 Gew.-% eines filmbildenden Harzes und 40 bis 95 Gew.-% eines Trägermaterials, welches mindestens ein wasserlösliches, polares organisches Lösungsmittel, Wasser und gegebenenfalls ein Treibmittel enthält, wobei als filmbildendes Harz

    1) mindestens ein wasserunlösliches Acrylpolymer und/oder

    2) mindestens ein wasserunlösliches Alkydharz in Kombination mit Nitrocellulose in Form einer Lösung in mindestens einem aliphatischen Alkohol der allgemeinen Formel ROH, worin R für eine geradkettige oder verzweigte Alkylgruppe mit 1 bis 6 Kohlenstoffatomen steht, vorhanden ist.

## Spritzanstrichmittel auf Wasserbasis

Gegenstand der Erfindung ist ein Spritzanstrichmittel auf Wasserbasis, auf der Grundlage eines einphasigen Gemisches aus

a) 5 bis 60 Gew.-% eines filmbildenden Harzes und

b) 40 bis 95 Gew.-% eines Trägermaterials, welches mindestens ein wasserlösliches polares organisches Lösungsmittel, Wasser und gegebenenfalls ein Treibmittel enthält.

Spritzanstrichmittel sind seit langem bekannt. Sie enthalten in der Regel ein filmbildendes Harz, ein organisches Lösungsmittel und übliche Lackzusätze sowie gegebenenfalls ein für das Versprühen des Mittels erforderliches Treibmittel. Aufgrund der Anwesenheit des organischen Lösungsmittels sind solche Spritzanstrichmitteln nachteilig wegen der bei ihrer Benutzung zwingend auftretenden Emission der organischen Lösungsmittel in die Atmosphäre.

Es hat daher nicht an Versuchen gefehlt, Spritzanstrichmittel auf Wasserbasis anzugeben, bei denen das als Träger für das filmbildende Polymer verwendete flüchtige organische Lösungsmittel teilweise oder vollständig ersetzt wird. Hierbei ergibt sich das Problem, daß es nicht ohne weiteres möglich ist, einfach ein wasserlösliches filmbildendes Harz zu verwenden, weil ja der nach Aufbringen und dem Trocknen der Spritzanstrichmittel gebildete Anstrichfilm wasserbeständig sein muß, wenn diese Zusammensetzung auch für die Behandlung von der Atmosphäre ausgesetzten Oberflächen verwendet werden soll.

Aus der DE-PS 29 47 999 sind bereits Aerosolanstrichmittel auf Wasserbasis bekannt, die auf einen engen Bereich von filmbildenden Polymeren beschränkt sind, nämlich auf in Wasser unlösliche filmbildende Acrylpolymere, die in Teilchenform in der flüssigen Phase suspendiert sind. Es handelt sich dabei also um ein Dispersionssystem und nicht um ein Lösungssystem, was gerade für Spritzanstrichmittel nicht zu befriedigen vermag.

Eine Weiterentwicklung dieser Aerosolanstrichmittel auf Wasserbasis ist in der DE-PS 31 38 298 beschrieben und umfaßt die Verwendung eines wasserlöslichen Polymers als filmbildendes Harz, um in dieser Weise die Nachteile der Dispersion zu beseitigen und ein Spritzanstrichmittel mit einer einzigen Phase zu erhalten. Bei den hierbei verwendeten filmbildenden Harzen handelt es sich um carboxylgruppenhaltige Harze, die durch Zugabe eines Amins neutralisiert und damit wasserlöslich gemacht worden sind. Dieses Amin wird beim Trocknen des aufgebrachten Anstrichmittelüberzuges wieder freigesetzt und stellt eine erhebliche Beeinträchtigung der Umwelt nicht nur wegen des unangenehmen Geruches sondern auch wegen der Giftigkeit des Amins dar. Aufgrund der Anwesenheit des Amins ist es erforderlich, diesen Spritzanstrichmitteln ein Mittel zur Stabilisierung des pH-Werts zuzusetzen, weil andernfalls mit Korrosionsproblemen, namentlich im Inneren der verwendeten Anstrichmittelbehälters zu rechnen ist. Aufgrund der Neutralisation besitzen diese sauren Harze oberflächenaktive Eigenschaften, so daß es zwingend notwendig ist, den Spritzanstrichmittel auf der Basis wasserlöslicher filmbildender Harze Entschäumer zuzusetzen, weil sonst beim Auftrag des Aerosolsprühlackes wegen des Schäumens des aufgebrachten Materials kein glatter Lacküberzug erhalten werden kann.

Die Aufgabe der vorliegenden Erfindung besteht nun darin, ein Spritzanstrichmittel der eingangs angegebenen Gattung derart zu verbessern, daß die Nachteile der bisher bekannten Spritzanstrichmittel auf Wasserbasis überwunden werden und insbesondere auf den Einsatz von Aminen zur Neutralisation der carboxylgruppenhaltigen, wasserlöslichen filmbildenden Harze verzichtet werden kann.

Es hat sich nunmehr gezeigt, daß es mit bestimmten wasserunlöslichen filmbildenden Harzen möglich ist, unter Verwendung geringer Mengen vergleichsweise umweltfreundlicher organischer Lösungsmittel, nämlich eines niedrigmolekularen Alkohols, eine Lösung des filmbildenden Harzes zu bilden, die auch zusammen mit dem gegebenenfalls verwendeten Treibmittel eine klare Lösung bildet, welche mit erheblichen Anteilen Wassers verdünnt werden kann unter Bildung eines einphasigen Gemisches, welches sich hervorragend als Sprühlack auf beliebige Oberflächen auftragen läßt und nach dem Abtrocknen Anstrichfilme mit hervorragenden Eigenschaften ergibt.

Gegenstand der Erfindung ist daher ein Spritzanstrichmittel auf Wasserbasis, auf der Grundlage eines einphasigen Gemisches aus

a) 5-60 Gew.-% eines filmbildenden Harzes und

b) 40-95 Gew.-% eines Trägermaterials, welches mindestens ein wasserlösliches, polares organisches Lösungsmittel, Wasser und gegebenenfalls ein Treibmittel enthält, welches als filmbildendes Harz

1) mindestens ein wasserunlösliches Acrylpolymer und/oder

2) mindestens ein wasserunlösliches Alkydharz in Kombination mit Nitrocellulose in Form einer Lösung in mindestens einem aliphatischen Alkohol der allgemeinen Formel ROH, worin R für eine geradkettige oder verzweigte Alkylgruppe mit 1 bis 6 Kohlenstoffatomen steht, als wasserlöslichem,

2

polarem, organischem Lösungsmittel enthält.

Die erfindungsgemäßen eingesetzten filmbildenden Harze sind also wasserunlöslich und frei von den Aminen, die nach dem oben angesprochenen Stand der Technik dazu erforderlich sind, die Löslichkeit der filmbildenden Harze in Wasser herbeizuführen. Durch die Anwendung des aliphatischen Alkohols wird es möglich, diese erfindungsgemäß ausgewählten filmbildenden Harze in Form einer klaren Lösung zu erhalten, die sich mit 10 bis 40 Gew.-% Wasserverschneiden läßt, so daß auf der einen Seite eine erhebliche Verringerung der notwendigen Menge des organischen Lösungsmittels und auf der anderen Seite die vollständige Beseitigung der Anwendung von Ammoniak oder organischen Aminen möglich werden.

Es hat sich weiterhin gezeigt, daß das erfindungsgemäße Spritzanstrichmittel aufgrund dieser ausgewählten Bestandteile nicht nur wesentlich einfacher herzustellen ist und damit wesentlich weniger Fehlchargen mit sich bringt, sondern bei hervorragender Lagerbeständigkeit von mehr als 12 Monaten wesentlich schneller trocknet, nämlich im Verlaufe von 20 bis 30 Minuten gegenüber 4 bis 6 Stunden bei den Aerosolanstrichmittel auf Basis wasserlöslicher filmbildender Harze wie sie aus der DE-PS 31 38 298 bekannt sind. Darüber hinaus zeigen die mit Hilfe der er findungsgemäßen Spritzanstrichmittel gebildeten Lacküberzüge ausgezeichnete Eigenschaften, was sich bei einer 1000 stündigen Bewitterungsuntersuchung gezeigt hat.

Da das erfindungsgemäße Spritzanstrichmittel einen neutralen pH-Wert aufweist. ist es nicht erforderlich, irgendwelche pH-Stabilisatoren zuzusetzen. Ein weiterer besonderer Vorteil der erfindungsgemäßen Spritzanstrichmittel ist darin zu sehen, daß das eingesetzte filmbildende Harz eben ein wasserunlösliches Harz ist und damit keines Entschäumers bedarf, der bei den durch Neutralisation mit Aminen wasserlöslich gemachten filmbildenden Harzen zwingend erforderlich ist. Insoweit läßt sich mit dem erfindungsgemäßen Spritzanstrichmittel nicht nur eine erhebliche Vereinfachung des Herstellungsverfahrens und eine Verminderung der Kosten durch den Verzicht auf sonst zwingend notwendige Zusätze erreichen, sondern es wird eine deutlich geringere Beeinträchtigung der Umwelt erreicht unter Aufrechterhaltung hervorragender Lackeigenschaften sowohl im Hinblick auf das Trocknungsverhalten als auch im Hinblick auf die Eigenschaften des Lacküberzuges.

Vorzugsweise enthält das erfindungsgemäße Spritzanstrichmittel 5 bis 60 Gew.-%, bevorzugter 10 bis 40 Gew.-% und noch bevorzugter 15 bis 30 Gew.-% des filmbildenden Harzes, 10 bis 40 Gew.-%, bevorzugter 15 bis 38 Gew.-% Wasser, 5 bis 50 Gew.-%, bevorzugter 15 bis 30 Gew.-% des aliphatischen Alkohols der allgemeinen Formel ROH, 0 bis 40 Gew.-%, bevorzugter 25 bis 40 Gew.-% und noch bevorzugter 30 bis 35 Gew.-% des Treibmittels, falls ein solches verwendet wird, und gegebenenfalls übliche Zusätze, wie anorganische und/oder organische Pigmente, Füllstoffe, Oberflächenhärter, Weichmacher, Antiabsetzmittel, Verlaufsmittel, Verdickungsmittel bzw. Thixotropiermittel und/oder Lösungsvermittler mit der Maßgabe, daß die Summe der Bestandteile 100 Gew.-% beträgt.

Als wasserunlösliches Acrylpolymer wird erfindungsgemäß vorzugsweise ein Homopolymer eines (Meth)acrylsäureesters und/oder ein Copolymer aus mindestens einem (Meth)acrylsäureester und gegebenenfalls weiteren copolymerisierbaren Monomeren eingesetzt. Als (Meth)acrylsäureester sind (Meth)acrylat, Ethyl(meth)acrylat, Butyl(meth)acrylat und Hydroxyethyl(meth)acrylat bevorzugt, während als copolymerisierbare Monomere zusammen mit einem oder mehreren (Meth)acrylsäureestern Vertreter der Gruppe, Styrol, Vinylchlorid und/oder Vinylidenchlorid in dem Acrylcopolymer enthalten sein können. Besonders bevorzugt als Acrylhomopolymer ist Polyethylmethacrylat mit einem mittleren Molekulargewicht von etwa 100 000 und einem Schmelzbereich von 145 bis 155°C. Als Acrylcopolymer ist ein Copolymer aus 42,3 % Methylmethacrylat, 27,2 % Butylacrylat, 15.2 % Butylmethacrylat, 3 % Hydroxyethylmethacrylat und 1 % Acrylsäure bevorzugt.

Erfindungsgemäß sind als aliphatische Alkohole der allgemeinen Formel ROH Ethanol und Butanol besonders bevorzugt. Bei dem erfindungsgemäß als filmbildendes Harz eingesetzten Alkydharz handelt es sich um ein Produkt aus einer Dicarbonsäure oder einem Dicarbonsäureanhydrid und einem geradkettigen oder verzweigten mehrwertigen Alkohol und einem Öl und/oder einer gegebenenfalls modifizierten Fettsäure. Besonders bevorzugt handelt es sich bei diesem Alkydharz um ein Produkt aus Phthalsäureanhydrid; Glycerin, Pentaerythrit und/oder Neopentylglykol als mehrwertigem Alkohol; und einer modifizierten Fettsäure mit einer Verseifungszahl von etwa 200 mg KOH/g, einem Schmelzbereich von etwa 35°C und einer Jodfarbzahl von etwa 48 gJ/100 g.

Das erfindungsgemäß als filmbildendes Harz eingesetzte Alkydharz wird zur Verbesserung des Trocknungsverhaltens mit Nitrocellulose zu kombiniert. Dabei wird die Nitrocellulose vorzugsweise in einer Menge von 10 bis 30 Gew.-%, bezogen auf das Alkydharz eingesetzt.

Der oder die erfindungsgemäß eingesetzten aliphatischen Alkohole der allgemeinen Formel ROH enthalten 1 bis 6 Kohlenstoffatome, vorzugsweise 2 bis 5 Kohlenstoffatome. Besonders bevorzugt ist die Verwendung von Ethanol, Isopropanol und Butanol.

Das erfindungsgemäße Spritzanstrichmittel kann als übliche Zusätze:

0 bis 1 Gew.-%, vorzugsweise 0,05 bis 0,5 Gew.-% mindestens eines oberflächenaktiven Mittels oder Netzmittels,

0 bis 8 Gew.-%, vorzugsweise 2 bis 5 Gew.-% mindestens eines Pigments zur Färbung des Anstrichs,

0 bis 2,0 Gew.-%, bevorzugter 0,4 bis 0,7 Gew.-% mindestens eines Weichmachers, wie Dioctylphthalat oder Diphenoxyethylformal,

0 bis 4 Gew.-%, bevorzugter 0,05 bis 0,5 Gew.-% mindestens eines Verlaufsmittels,

0 bis 12 Gew.-%, bevorzugter 2,5 bis 8 Gew.-% mindestens eines Lösungsvermittlers, wie eines aliphatischen Alkohols oder eines aliphatischen Kohlenwasserstoffs, vorzugsweise Benzin oder Testbenzin,

0 bis 1 Gew.-%, bevorzugter 0,05 bis 0,5 Gew.-% mindestens eines Verdickungsmittels bzw. Thixotropiermittels,

0 bis 5 Gew.-%, bevorzugter 0,1 bis 0,2 Gew.-% mindestens eines Oberflächenhärters und

9 bis 10 Gew.-%, bevorzugter 1,5 bis 3 Gew.-% mindestens eines Füllstoffes enthalten.

Das erfindungsgemäße Spritzanstrichmittel kann zur Bildung von pigmentierten Lacküberzügen als auch von Klarlacküberzügen in glänzender oder matter Form verwendet werden, wobei im letzten Fall ein übliches Mattierungsmittel zugegeben wird.

Zur Herstellung des erfindungsgemäßen Spritzanstrichmittels wird das filmbildende Harz in dem gewünschten aliphatischen Alkohol der allgemeinen Formel ROH gelöst, wonach die weiteren zusätzlichen Bestandteile zugegeben und eingemischt werden, wobei gegebenenfalls das Ganze in einem üblichen Druckgasbehälter eingebracht und mit dem Treibmittel versetzt wird.

Das erfindungsgemäße Spritzanstrichmittel ist besonders gut geeignet zur Beschichtung von Holz, Metall, Kunststoff, Papier, Styropor etc. und bringt durch den Einsatz von lediglich Alkohol und Wasser im Vergleich zu den Lösungsmitteln herkömmlicher Lacke eine erhebliche Umweltentlastung mit sich.

Da erfindungsgemäß eine klare Bindemittellösung eingesetzt wird und auf die Neutralisation mit Aminen, wie beispielsweise Triethylamin bzw. Ammoniak, den Zusatz von Inhibitoren zur Stabilisierung des pH-Wertes und auf die Verwendung von Entschäumungsmitteln verzichtet werden kann, ergibt sich eine erhebliche Vereinfachung der Zusammensetzung und damit eine deutlich kostengünstigere Herstellung bei gleichzeitig geringerer Umweltbelastung. Insoweit stellt die beanspruchte Lehre eine erhebliche Bereicherung der Technik dar.

Das erfindungsgemäße Spritzanstrichmittel läßt sich mit Hilfe üblicher Spritztechniken auf die zu behandelnden Substrate auftragen, beispielsweise mit Hilfe des Niederdruck-, Hochdruck-, Airless-, oder Air-Mix-Spritzverfahren durch Kalt- oder Heißspritzen, sowie durch das Elektrostatikverfahren oder aber auch in der Weise, daß dem Spritzanstrichmittel ein Treibmittelzugesetzt wird, so daß man ein Aerosolanstrichmittel erhält, welches in üblicher Weise in eine Sprühdose eingebracht wird.

Die folgenden Beispiele dienen der weiteren Erläuterung der Erfindung.

**Beispiel 1**

Aerosolanstrichmittel zur Bildung eines blauen pigmentierten glänzenden Decklackes:

4

| Bestandteile | Gew.-% |
|---|---|
| Reinacrylatharz (Plexigum N 742) | 10,21 |
| Butanol | 26,67 |
| blaues Pigment | 0,56 |
| weißes Pigment | 7,36 |
| Oberflächenhärter (Baysilon Öl) | 0,10 |
| Weichmacher (Desavin) | 0,51 |
| Talkum | 1,53 |
| Verlaufsmittel (Tegoprene 100) | 3,31 |
| Oberflächenaktives Mittel (Soyalecithin) | 0,26 |
| Isopropylalkohol (Lösungsvermittler) | 2,55 |
| Lösungsvermittler (Benzin 100/140) | 2,55 |
| Verdickungsmittel (Cryvallac SF) | 0,51 |
| Wasser | 15,31 |
| Dimethylether | 28,57 |
| Insgesamt | 100 Gew.-% |

Die oben angegebenen Bestandteile werden in einen üblichen Druckgasbehälter eingebracht und ergeben nach dem Aufsprühen auf eine Substratoberfläche eine glänzende Decklacküberzugsschicht mit hervorragenden Eigenschaften.

**Beispiel 2**

Aerosolanstrichmittel zur Bildung eines glänzenden Klarlacküberzuges.

| Bestandteile | Gew.-% |
|---|---|
| Reinacrylatharz (Plexigum N 742) | 11,48 |
| Butanol | 29,54 |
| Oberflächenaktives Mittel (Sojalecithin) | 0,56 |
| Weichmacher (Desavin) | 0,56 |
| Verlaufsmittel (Tegoprene 100) | 0,56 |
| Lösungsvermittler (Isopropylalkohol) | 2,73 |
| Lösungsvermittler (Benzin 100/140) | 2,73 |
| Wasser | 21,84 |
| Dimethylether | 30,00 |
| Insgesamt | 100 Gew.-% |

**Beispiel 3**

Aerosolanstrichmittel zur Bildung eines matten Klarlacküberzuges.

5

| Bestandteile | Gew.-% |
|---|---|
| Harz-Polymerisat auf Basis von Isobutylmethacrylat (Plexigum P 28) | 10,20 |
| Lösungsvermittler (Testbenzin 145/200) | 7,50 |
| Ethanol | 15,66 |
| Verlaufsmittel (Tegoprene 100) | 0,42 |
| Oberflächenaktives Mittel (Sojalecithin) | 0,42 |
| Weichmacher (Dioctylphthalat) | 1,80 |
| Butanol | 3,00 |
| Lösungsvermittler (Isopropylalkohol) | 2,40 |
| Lösungsvermittler (Benzin 100/140) | 2,40 |
| Wasser | 15,00 |
| Mattierungsmittel (OK 412) ($SiO_2$) | 1,20 |
| Dimethylether | 40,00 |
| Insgesamt | 100 Gew.-% |

**Beispiel 4**

Aerosolanstrichmittel zur Erzeugung eines glänzenden Klarlacküberzuges.

| Bestandteile | Gew.-% |
|---|---|
| Acrylcopolymerharz (Acrylharz X 190-335) | 38,8 |
| Butanol | 7,9 |
| Verlaufsmittel (Tegoprene 100) | 0,4 |
| Weichmacher (Desavin) | 1,9 |
| Oberflächenaktives Mittel (Sojalecithin) | 0,4 |
| Wasser | 15,6 |
| Dimethylether | 35,0 |
| Insgesamt | 100 Gew.-% |

Bei dem oben eingesetzten Acrylharz handelt es sich um ein Copolymer aus 42,3 % Methylmethacrylat, 27,2 % Butylacrylat, 16,2 % Butylmethacrylat, 14,3 % Hydroxyethylmethacrylat und 1 % Acrylsäure.

**Beispiel 5**

Aerosolanstrichmittel zur Bildung eines orange seidenglänzenden Decklackes.

| Bestandteile | Gew.-% |
|---|---|
| Alkydharz (Alftalat AC 451 N) | 10,55 |
| Alkydharzlösung (K 7464) | 3,45 |
| Nitrocellulose | 2,50 |
| Butanol | 14,10 |
| Pigment (pastös) | 7,95 |
| Weichmacher (Dioctylphthalat) | 0,70 |
| Verlaufsmittel (Paint Additive 11) | 0,20 |
| Verdickungsmittel (Bentone 34) | 0,50 |
| Lackadditiv (Wachs PE 130) | 0,20 |
| Oberflächenhärter (Di-n-butylzinndilaurat) | 0,05 |
| Oberflächenhärter (Rohramar NSH) | 0,15 |
| Lösungsvermittler (Ethylacetat) | 4,85 |
| Lösungsvermittler (Butylacetat) | 4,85 |
| Wasser | 14,95 |
| Dimethylether | 35,00 |
| Insgesamt | 100 Gew.-% |

**Beispiel 6**

Spritzanstrichmittel zur Bildung eines hellblauen Decklackes:

| Bestandteile | Gew.-% |
|---|---|
| Reinacrylatharz (Plexigum N742) | 14,30 |
| Butanol | 37,34 |
| blaues Pigment | 0,78 |
| weißes Pigment | 10,31 |
| Oberflächenhärter (Baysilon Öl) | 0,14 |
| Weichmacher (Desavin) | 0,71 |
| Talkum | 2,14 |
| Verlaufsmittel (Tegoprene 100) | 4,63 |
| Oberflächenaktives Mittel (Soyalecithin) | 0,36 |
| Isopropylalkohol (Lösungsvermittler) | 3,57 |
| Lösungsvermittler (Benzin 100/140) | 3,57 |
| Verdickungsmittel (Cryvallac SF) | 0,71 |
| Wasser | 21,44 |
| Insgesamt: | 100,00 Gew.% |

**Beispiel 7**

Spritzanstrichmittel zur Bildung eines klaren Decklackes:

| Bestandteile | Gew.% |
|---|---|
| Reinacrylatharz (Plexigum N 742) | 16,40 |
| Butanol | 42,20 |
| Oberflächenaktives Mittel (Sojalecithin) | 0,80 |
| Weichmacher (Desavin) | 0,80 |
| Verlaufsmittel (Tegoprene 100) | 0,80 |
| Lösungsvermittler (Isopropylalkohol) | 3,90 |
| Lösungsvermittler (Benzin 100/140) | 3,90 |
| Wasser | 31,20 |
| Insgesamt: | 100,00 Gew.% |

**Beispiel 8**

Spritzanstrichmittel zur Bildung eines matten Decklackes:

| Bestandteile | Gew.% |
|---|---|
| Harz-Polymerisat auf Basis von Isobutylmethacrylat (Plexigum P 28) | 17,00 |
| Lösungsvermittler (Testbenzin 145/200) | 12,50 |
| Ethanol | 26,10 |
| Verlaufsmittel (Tegoprene 100) | 0,70 |
| Oberflächenaktives Mittel (Sojalecithin) | 0,70 |
| Weichmacher (Dioctylphthalat) | 3,00 |
| Butanol | 5,00 |
| Lösungsvermittler (Isopropylalkohol) | 4,00 |
| Lösungsvermittler (Benzin 100/140) | 4,00 |
| Wasser | 25,00 |
| Mattierungsmittel (OK 412) (SiO2) | 2,00 |
| Insgesamt: | 100 Gew.% |

**Beispiel 9**

Spritzanstrichmittel zur Bildung eines glatten Decklackes:

| Bestandteile | Gew.% |
|---|---|
| Acrylcopolymerharz (Acrylharz X 190-335) | 59,70 |
| Butanol | 12,15 |
| Verlaufsmittel (Tegoprene 100) | 0,62 |
| Weichmacher (Desavin) | 2,91 |
| Oberflächenaktives Mittel (Sojalecithin) | 0,62 |
| Wasser | 24,00 |
| Insgesamt: | 100,00 Gew.% |

**Beispiel 10**

8

Spritzanstrichmittel zur Bildung eines pigmentierten Decklackes:

| Bestandteile | Gew.% |
|---|---|
| Alkydharz (Alftalat AC 451 N) | 16,23 |
| Alkydharzlösung (K 7464) | 5,31 |
| Nitrocellulose | 3,85 |
| Butanol | 21,69 |
| Pigment (pastös) | 12,22 |
| Weichmacher (Dioctylphthalat) | 1,08 |
| Verlaufsmittel (Paint Additive 11) | 0,31 |
| Verdickungsmittel (Bentone 34) | 0,77 |
| Lackadditiv (Wachs PE 130) | 0,31 |
| Oberflächenhärter (Di-n-butylzinndilaurat) | 0,08 |
| Oberflächenhärter (Rohramar NSH) | 7,46 |
| Lösungsvermittler (Ethylacetat) | 7,46 |
| Lösungsvermittler (Butylacetat) | 0,23 |
| Wasser | 23,00 |
| Insgesamt: | 100,00 Gew.% |

## Ansprüche

1. Spritzanstrichmittel auf Wasserbasis, auf der Grundlage eines einphasigen Gemisches aus
a) 5-60 Gew.-% eines filmbildenden Harzes und
b) 40-95 Gew.-% eines Trägermaterials, welches mindestens ein wasserlösliches, polares organisches Lösungsmittel, Wasser und gegebenenfalls ein Treibmittel enthält,
**dadurch gekennzeichnet,** daß es als filmbildendes Harz
1) mindestens ein wasserunlösliches Acrylpolymer und/oder
2) mindestens ein wasserunlösliches Alkydharz in Kombination mit Nitrocellulose in Form einer Lösung in mindestens einem aliphatischen Alkohol der allgemeinen Formel ROH, worin R für eine geradkettige oder verzweigte Alkylgruppe mit 1 bis 6 Kohlenstoffatomen steht, als wasserlöslichem, polarem, organischem Lösungsmittel enthält.

2. Spritzanstrichmittel nach Anspruch 1, **dadurch gekennzeichnet,** daß es
a) 5-60 Gew.-% des filmbildenden Harzes,
b) 10-40 Gew.-% Wasser,
c) 5-50 Gew.-% des aliphatischen Alkohols der allgemeinen Formel ROH,
d) 0-40 Gew.-% des Treibmittels und gegebenenfalls
e) übliche Zusätze, wie anorganische und/oder organische Pigmente, Füllstoffe, Oberflächenhärter, Weichmacher, Antiabsetzmittel, Verlaufsmittel, Verdickungsmittel bzw. Thixotropierungsmittel und/oder Lösungsvermittler mit der Maßgabe enthält, daß die Summe der Bestandteile 100 Gew.-% beträgt.

3. Spritzanstrichmittel nach Anspruch 1 oder2, **dadurch gekennzeichnet,** daß es als Acrylpolymer ein Homopolymer eines (Meth)acrylsäuresters und/oder ein Copolymer aus mindestens einem (Meth)-acrylsäurester und gegebenenfalls weiteren copolymerisierbaren Monomeren enthält.

4. Spritzanstrichmittel nach Anspruch bis 3, **dadurch gekennzeichnet,** daß es als Acrylpolymer ein Homopolymer von Methyl(meth)acrylat, Ethyl(meth)acrylat, Butyl(meth)acrylat oder Hydroxyethyl(meth)-acrylat und/oder ein Copolymer aus mindestens einem Vertreter der Methyl(meth)acrylat, Ethyl(meth)-acrylat, Butyl(meth)acrylat oder Hydroxyethyl(meth)acrylat und Meth)acrylsäure umfassenden Gruppe und mindestens einem Vertreter der Styrol, Vinylchlorid und/oder Vinylidenchlorid umfassenden Gruppe enthält.

5. Spritzanstrichmittel nach Anspruch 4, **dadurch gekennzeichnet,** daß es als Acrylpolymer ein Polyethylmethacrylat mit einem mittleren Molekulargewicht von etwa 100.000 und einem Schmelzbereich von 145-155° C enthält.

6. Spritzanstrichmittel nach Anspruch 1, **dadurch gekennzeichnet,** daß es als Alkydharz ein Alkydharz aus einer Dicarbonsäure oder einem Dicarbonsäureanhydrid, einem geradkettigen oder verzweigten mehrwertigen Alkohol und einem Öl und/oder einer gegebenenfalls modifizierten Fettsäure enthält.

9

7. Spritzanstrichmittel nach Anspruch 6, **dadurch gekennzeichnet**, daß es als Alkydharz ein Alkydharz aus Phthalsäureanhydrid; Glycerin, Pentaerythrit und/oder Neopentylglykol als mehrwertigem Alkohol; und einer modifizierten Fettsäure mit einer Verseifungszahl von etwa 200 mg KOH/g, einem Schmelzbereich von etwa 35° C und einer Jodfarbzahl von etwa 48 gJ/100g enthält.

8. Spritzanstrichmittel nach mindestens einem der Ansprüche 1, 6 oder 7, **dadurch gekennzeichnet**, daß es das Alkydharz in Kombination mit Nitrocellulose enthält.

9. Spritzanstrichmittel nach mindestens einem der vorhergehenden Ansprüche, **dadurch gekennzeichnet**, daß die Alkylgruppe R des Alkohols 2 bis 5 Kohlenstoffatome aufweist.

10. Spritzanstrichmittel nach mindestens einem der Ansprüche 2 bis 9, **dadurch gekennzeichnet**, daß es als übliche Zusätze e)

0-1 Gew.-% mindestens eines oberflächenaktiven Mittels ,

0-8 Gew.-% mindestens eines Pigments,

0-2,0 Gew.-% mindestens eines Weichmachers,

0-4,0 Gew.-% mindestens eines Verlaufsmittels,

0-12 Gew.-% mindestens eines Lösungsvermittlers,

0-1 Gew.-% mindestens eines Verdickungsmittels bzw. Thixotropierungsmittels,

0-5 Gew.-% mindestens eines Oberflächenhärters und

0-10 Gew.-% mindestens eines Füllstoffs

enthält.

Europäisches
Patentamt

EUROPÄISCHER RECHERCHENBERICHT

Nummer der Anmeldung

EP 89 11 2227

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | GB-A-2 160 877 (INGENIEURBURO LEUENBERGER AG) <br> * Seite 6, Zeile 30 - Seite 7, Zeile 10 * <br> --- | 1-5,9-10 | C 09 D 5/02 <br> C 09 D 133/06 <br> C 09 D 167/08 // <br> (C 09 D 167/08 <br> C 09 D 101:18 ) |
| A | FR-A- 842 930 (IMPERIAL CHEMICAL INDUSTRIES LTD) <br> * Seite 2, linke Spalte, Zeilen 5-14 * <br> --- | 1 | |
| A | US-A-4 487 859 (MARTINO) <br> * Spalte 4, Zeilen 62-66 * <br> ----- | 1 | |
| | | | RECHERCHIERTE SACHGEBIETE (Int. Cl.5) <br><br> C 09 D <br> C 08 L <br> C 08 J <br> C 08 K <br> C 08 F |

Der vorliegende Recherchenbericht wurde für alle Patentansprüche erstellt

| Recherchenort | Abschlußdatum der Recherche | Prüfer |
|---|---|---|
| DEN HAAG | 19-09-1989 | SCHUELER D.H.H. |

EPO FORM 1503 03.82 (P0403)